# FASCICULE DE BREVET EUROPEEN

(11) **EP 3 239 791 B1**
(45) Date de publication et mention de la délivrance du brevet: **20.03.2019**
(21) Numéro de dépôt: 17168451.7
(22) Date de dépôt: 27.04.2017
(51) Int. Cl.: G05B 15/02

(54) **PROCÉDE ET SYSTÈME DE PILOTAGE AUTOMATIQUE D'AU MOINS UN SYSTÈME PILOTABLE ÉQUIPANT UN LOCAL**
AUTOMATISCHES STEUERUNGSVERFAHREN UND -SYSTEM MINDESTENS EINES STEUERBAREN SYSTEMS IN EINEM RAUM
METHOD AND SYSTEM FOR AUTOMATICALLY CONTROLLING AT LEAST ONE CONTROLLABLE SYSTEM INSTALLED IN A ROOM

(30) Priorité: 28.04.2016 FR 1653765
(43) Date de publication de la demande: 01.11.2017
(73) Titulaire: Commissariat à l'Energie Atomique et aux Energies Alternatives, 75015 Paris (FR)
(72) Inventeur: Daignan, Jean-Michel, 73000 Chambéry (FR); Jay, Arnaud, 73100 TRESSERVE (FR)
(74) Mandataire: Novaimo

(56) Documents cités:
- US-A- 5 986 357
- US-A1- 2013 030 732
- US-A1- 2015 006 463
- US-A1- 2015 286 948

## Description

### Domaine technique de l'invention

L'invention se situe dans le domaine de la domotique et concerne un procédé et un système de pilotage automatique d'un système ou sous-système pilotable équipant un local qui comporte au moins une pièce.

### État de la technique

La domotique désigne l'ensemble des techniques visant à intégrer à un logement résidentiel (maison, appartement) ou à un bâtiment non résidentiel (immeuble de bureaux, hôpital, bâtiment d'enseignement), des automatismes pour faire fonctionner des systèmes ou sous-systèmes du logement ou du bâtiment, en matière de confort, de sécurité, de gestion de l'énergie, de communication, etc. Un système de domotique permet de piloter de façon automatique différents systèmes ou sous-systèmes d'un local - système de chauffage, système de ventilation, volets roulants, porte de garage, portail d'entrée, prises électriques - en proposant des solutions techniques pour répondre à des besoins de confort, de gestion énergétique (optimisation de l'éclairage, du chauffage et du fonctionnement des appareils électriques), de sécurité (alarme) et de communication (commandes à distance, signaux visuels ou sonores, etc.). Il permet d'optimiser le fonctionnement de ces systèmes et de les adapter au profil des occupants du local en fonction de leur mode de vie et de leurs préférences.

Par exemple, le pilotage automatique peut faire fonctionner le système de chauffage uniquement lorsque le local est occupé, ce qui permet de réaliser des économies d'énergie, ou encore pour lancer des appareils électroménagers bruyants (machine à laver, sèche-linge, etc.) lorsque les occupants sont absents ce qui procure un gain en confort.

La détection de l'occupation d'un local peut être basée sur différentes techniques de détection. Le document US2015/0006463 décrit un système de détection de présence dans un local pouvant utiliser tout ou partie des techniques de détection suivantes : détection d'un bruit de fond sur la ligne électrique principale, détection de changements dans le trafic de connexions réseau (par exemple wifi), détection de signaux radio (par exemple de signaux de téléphonie cellulaire), détection de sons, détection infrarouge de chaleur pour détecter des changements rapides de température, détection infrarouge pour détecter de signaux IR émis par des appareils tels que des télécommandes TV, détection d'ultrasons, détection de mouvement, détection de CO2, détection de pression, etc.

La détection d'occupation peut toutefois s'avérer complexe à mettre en oeuvre.

La présente invention vient améliorer la situation, notamment en proposant un pilotage automatique d'un système équipant un local (chauffage, ventilation, volets roulants, portail, etc.) tenant compte de l'occupation du local, qui soit fiable, efficace et simple à mettre en oeuvre.

### Objet de l'invention

A cet effet, l'invention concerne un procédé de pilotage automatique d'au moins un système pilotable équipant un local comportant au moins une pièce Pi, comprenant les étapes suivantes :
- une étape de mesure de paramètres d'activité relatifs à la pièce Pi comportant une sous-étape de détection de mouvement à l'aide d'au moins un détecteur de mouvement installé dans la pièce et une sous-étape de mesure d'une concentration en dioxyde de carbone dans l'air de la pièce Pi ;
- une étape de détermination d'un état d'occupation de la pièce Pi comportant :
   i. un premier test d'occupation basé sur une détection de mouvement ;
   ii. et, dans le cas où le premier test d'occupation est négatif, un deuxième test d'occupation basé sur des mesures relatives à la concentration en dioxyde de carbone ;
- une étape de détermination d'un état d'activité de la pièce Pi, ledit état pouvant être actif ou inactif, à partir des résultats de l'étape de détermination de l'état d'occupation de la pièce Pi ;
- une étape de pilotage automatique du système équipant le local en fonction de l'état d'activité déterminé, actif ou inactif, de la pièce Pi.

Par les termes « état d'activité », on entend désigner un état qui peut être actif ou inactif. L'état d'activité, actif ou inactif, d'une pièce ou du local dépend, notamment, de son état d'occupation. Selon l'invention, pour déterminer l'état d'occupation de la pièce, on vérifie si elle est occupée ou inoccupée sur la base d'une détection de mouvement, puis, de façon complémentaire, si aucun mouvement n'a été détecté, sur la base d'une analyse de mesures relatives à la concentration en dioxyde de carbone dans l'air de la pièce. Grâce à cela, on détecte de façon rapide et fiable la présence éventuelle d'un ou plusieurs occupants dans la pièce.

Dans un mode de réalisation particulier, trois niveaux respectivement haut, intermédiaire et bas de concentration en dioxyde de carbone étant paramétrés pour la pièce Pi, lors du deuxième test d'occupation, on détermine à quel état correspond la concentration en dioxyde de carbone mesurée et :
- si la concentration mesurée correspond à un état haut, on détermine que la pièce Pi est occupée ;
- si la concentration mesurée correspond à un état bas, on détermine que la pièce Pi est inoccupée ;
- si la concentration mesurée correspond à un état intermédiaire, on réalise un test sur le gradient de concentration en dioxyde de carbone.

Avantageusement, les niveaux de concentration en dioxyde de carbone relatifs à une pièce sont paramétrés par une méthode de partitionnement de données, à partir des données mesurées de concentration en dioxyde de carbone dans ladite pièce Pi durant une fenêtre temporelle d'analyse, avantageusement glissante dans le temps.

Avantageusement encore, cinq états de gradient de concentration en dioxyde de carbone, comprenant un petit gradient positif, un gradient élevé positif, un gradient nul, un petit gradient négatif, un gradient élevé négatif, étant paramétrés pour la pièce Pi, lors du test sur le gradient de concentration en dioxyde de carbone, on détermine à quel état correspond le gradient de concentration en dioxyde de carbone mesuré à un instant courant et
- si le gradient mesuré à l'instant courant est positif et correspond à un état de gradient élevé positif, on détermine que la pièce est occupée ;
- si le gradient mesuré à l'instant courant est négatif et correspond à un état de gradient élevé négatif, on détermine que la pièce est inoccupée.

Dans un mode de réalisation particulier, les états de gradient de concentration en dioxyde de carbone sont paramétrés pour une pièce par une méthode de partitionnement de données, à partir des données mesurées de gradient de la concentration en dioxyde de carbone dans ladite pièce durant une fenêtre temporelle d'analyse, avantageusement glissante dans le temps.

Avantageusement, un premier et un deuxième type de pièce étant définis,
- si la pièce est de premier type, on détermine qu'elle est dans un état inactif dans les deux cas i) et ii) suivants :
   i) si la détection d'occupation est négative ;
   ii) si la détection d'occupation est positive, au moins un occupant ayant été détecté dans la pièce, et si on détecte un état de repos de l'occupant et
   iii) si la pièce est de deuxième type, on détermine qu'elle est dans un état inactif seulement si la détection d'occupation est négative.

Ainsi, l'état actif ou inactif d'une pièce dépend non seulement de l'état d'occupation de cette pièce mais également du type de la pièce.

Dans un mode de réalisation particulier, on mesure un niveau d'éclairement lumineux dans la pièce et si le niveau d'éclairement lumineux est inférieur à un seuil prédéfini, on détecte un état de repos de l'occupant dans la pièce.

La détection d'un état de repos du ou des occupants de la pièce est réalisée sur la base d'une analyse de la luminosité ou du niveau d'éclairement lumineux dans la pièce.

Avantageusement, le local comportant une pluralité de pièces, on détermine un état d'activité global du local à partir des états d'activité respectifs des pièces du local, et, lors de l'étape de pilotage, on pilote le système pilotable équipant le local en fonction de l'état d'activité global du local.

Dans un mode de réalisation particulier, une étape de prévision d'une période d'activité ou d'inactivité du local à partir de données antérieures relatives à l'état d'activité de la pièce ou du local, et en ce que, lors de l'étape de pilotage, on programme un mode de fonctionnement adapté pendant la période d'activité ou d'inactivité prévue.

Le système pilotable du local peut être l'un au moins des systèmes du groupe comportant un système de chauffage, un système de climatisation, un système de ventilation, une porte de garage, un portail d'entrée, des prises électriques et des volets roulants.

L'invention concerne aussi un système de pilotage automatique d'au moins un système pilotable équipant un local comportant au moins une pièce, comprenant des moyens matériels et des moyens logiciels pour mettre en oeuvre les étapes du procédé tel que précédemment défini.

Dans une forme de réalisation particulière, le système comprend :
- des capteurs de paramètres d'activité relatifs à la pièce comportant au moins un détecteur de mouvement installé dans la pièce et au moins un capteur de concentration en dioxyde de carbone dans l'air de la pièce ;
- un module de détermination d'un état d'occupation, occupé ou inoccupé, de la pièce, destiné à exécuter
   i. un premier test d'occupation basé sur une détection de mouvement ;
   ii. et, si le premier test d'occupation est négatif, un deuxième test d'occupation basé sur des mesures relatives à la concentration en dioxyde de carbone ;
- un module de détermination d'un état d'activité de la pièce, ledit état pouvant être actif ou inactif, à partir des résultats du module de détermination de l'état d'occupation de la pièce ;
- un module de pilotage automatique du système pilotable équipant le local en fonction de l'état d'activité déterminé, actif ou inactif, de la pièce.

Avantageusement, un premier et un deuxième type de pièce étant définis, le système comprend un module de détection d'un état de repos dans une pièce de premier type occupée et en ce que le module de détermination d'un état d'activité de la pièce est agencé pour :
- si la pièce est de premier type, déterminer qu'elle est dans un état inactif dans les deux cas i) et ii) suivants :
   i) si la détection d'occupation est négative ;
   ii) si la détection d'occupation positive, au moins un occupant ayant été détecté dans la pièce, et si un état de repos de l'occupant est détecté et
- si la pièce est de deuxième type, déterminer qu'elle est dans un état inactif seulement si la détection d'occupation est négative.

### Description sommaire des dessins

L'invention sera mieux comprise à l'aide de la description suivante d'un mode de réalisation particulier du procédé et du système de pilotage de l'invention, en référence aux dessins annexés sur lesquels :
- Les figures 1A et 1B représentent un organigramme des étapes du procédé de pilotage, selon un mode de réalisation particulier de l'invention ;

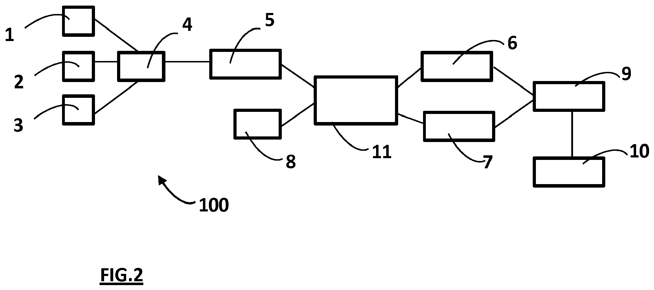

- La figure 2 représente un schéma bloc fonctionnement du système de pilotage 100, selon une forme de réalisation particulière de l'invention ;
- Les figures 3A à 3D représentent respectivement l'évolution temporelle (sur une période d'environ 36h) des paramètres suivants :
   o la concentration en CO₂ mesurée dans une chambre,
   o le niveau correspondant de concentration en CO₂ dans la chambre,
   o l'état du gradient de concentration en CO₂ dans la chambre,
   o l'état d'occupation de la chambre.

### Description détaillée de modes de réalisation particuliers de l'invention

Le procédé de pilotage de l'invention vise à piloter de façon automatique un ou plusieurs systèmes pilotables équipant un local, en tenant compte de l'occupation dans le local. Il est mis en oeuvre par un système de pilotage 100 qui sera décrit plus loin.

Le local peut être un logement résidentiel (maison ou appartement) ou un bâtiment non résidentiel (par exemple un immeuble de bureaux, un bâtiment d'enseignement, un hôpital, etc.). Il comporte une ou plusieurs pièces.

Le local est équipé d'un ou plusieurs systèmes ou équipements pilotables par le système de pilotage 100, tels qu'un système de chauffage ou de climatisation, un système de ventilation, des volets roulants, des éclairages, un portail d'entrée, un système d'alarme de sécurité, des équipements audio et/ou vidéo, des appareils électroménagers, etc..

Une pièce du local peut être caractérisée par un état d'activité. On définit deux états d'activité : un état « actif » et un état « inactif ». L'état d'activité dépend de l'occupation de la pièce et éventuellement, selon le type de la pièce, du fait que le ou les occupants dans la pièce sont au repos ou en activité, comme cela sera explicité par la suite.

Un premier et un deuxième type de pièce sont définis ci-après.

Une pièce du premier type est typiquement une chambre à coucher. L'état d'activité d'une pièce de premier type dépend à la fois de l'occupation dans la pièce et, le cas échéant, du niveau d'activité du ou des éventuels occupants de la pièce. Plus précisément, une pièce de premier type est dans un état actif si la pièce est occupée - un ou plusieurs occupants étant présents dans la pièce - et le ou l'un au moins des occupants de la pièce n'est pas au repos. Une pièce de premier type est dans un état inactif dans chacun des deux cas suivants :
- la pièce est inoccupée, aucun occupant n'étant présent dans la pièce ;
- la pièce est occupée - un ou plusieurs occupants étant présents dans la pièce - et ce ou ces occupants sont au repos (c'est-à-dire qu'ils ne sont pas en activité).

Une pièce du deuxième type est par exemple une pièce de séjour, une salle de bain, une cuisine. L'état d'activité d'une pièce de deuxième type dépend ici uniquement de l'occupation dans la pièce. Plus précisément, une pièce de deuxième type est dans un état actif dans le cas où la pièce est occupée, un ou plusieurs occupants étant présents dans la pièce, et dans un état inactif dans le cas où la pièce est inoccupée, aucun occupant n'étant présent dans la pièce.

Un local comportant plusieurs pièces peut lui-même être caractérisé par un état d'activité global qui peut être « actif » ou « inactif ». Dans le mode de réalisation décrit ici, le local est dans un état inactif si les conditions suivantes sont cumulativement satisfaites :
- toutes les pièces du premier type du local sont dans un état inactif ;
- toutes les pièces du deuxième type du local sont dans un état inactif.

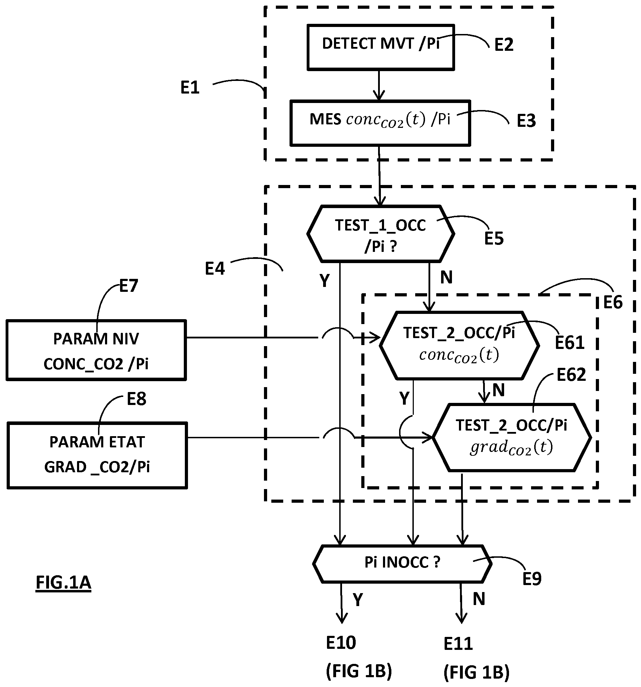

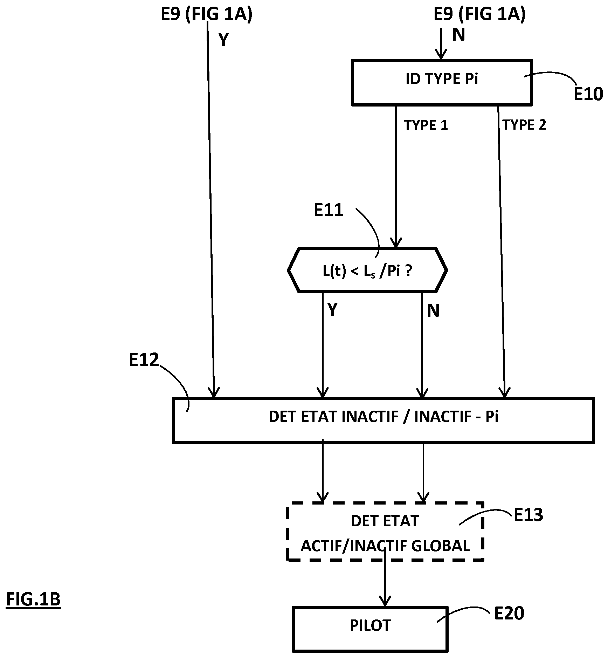

On va maintenant décrire, en référence à la figure 1, le procédé de pilotage automatique d'un système pilotable du local, par exemple un système de chauffage, selon un mode particulier de réalisation de l'invention. Le procédé est mis en oeuvre par le système de pilotage 100.

Supposons que le local comporte cinq pièces : un séjour P1, une cuisine P2, une salle de bain P3 et deux chambres à coucher P4 et P5.

En référence aux figures 1A et 1B, le procédé comprend une première étape E1 de mesure de paramètres d'activité relatifs à chacune des pièces Pi avec 1 ≤ *i* ≤ 5. L'étape E1 comporte :
- une sous-étape E2 de détection de mouvement, à l'aide de détecteurs de mouvement installés dans les pièces P1 à P5 et
- une sous-étape E3 de mesure d'une concentration en dioxyde de carbone (CO₂) dans l'air à l'aide de capteurs de CO₂ installés dans chacune des pièces P1 à P5.

L'étape de mesure E1 est suivie d'une étape E4 de détermination d'un état d'activité de chacune des pièces Pi avec 1 ≤ *i* ≤ 5, cet état pouvant être « actif » ou « inactif », à partir des paramètres d'activité détectés ou mesurés à l'étape E2 et éventuellement à l'étape E3.

Pour déterminer l'état d'activité d'une pièce Pi, avec 1 ≤ *i* ≤ 5, on met d'abord en oeuvre une étape E4 de détermination d'un état d'occupation de la pièce Pi comportant les tests successifs suivants :
i. un premier test d'occupation E5 de la pièce Pi avec 1 ≤ *i* ≤ 5, basé sur une détection de mouvement ;
ii. et, si le premier test d'occupation E5 est négatif, un deuxième test d'occupation E6 de la pièce Pi avec 1 ≤ *i* ≤ 5, basé sur des mesures relatives à la concentration en dioxyde de carbone dans la pièce Pi.

Les tests d'occupation E5 et E6 visent à déterminer si une pièce est occupée, c'est-à-dire si un ou plusieurs occupants sont présents dans cette pièce.

Le premier test d'occupation E5 utilise des mesures réalisées par des capteurs ou détecteurs de mouvement installés dans les pièces P1 à P5. Ces capteurs de mouvement sont par exemple, de façon connue, des capteurs à infrarouge. Si le premier test d'occupation E5 est positif (branche Y sur la figure 1) pour la pièce Pi (1 ≤ *i* ≤ 5), autrement dit en cas de détection positive de mouvement dans la pièce Pi, le procédé passe directement à une étape de test final d'occupation E9, explicité plus loin. Si le premier test d'occupation E5 est négatif (branche N sur la figure 1) pour la pièce Pi (1 ≤ *i* ≤ 5), autrement dit en l'absence de mouvement détecté dans la pièce Pi considérée, le deuxième test d'occupation E6 est exécuté. Ainsi le deuxième test d'occupation E6 n'est mis en oeuvre que si le premier test d'occupation est négatif.

Le deuxième test d'occupation E6 utilise des mesures relatives à la concentration en dioxyde de carbone dans la pièce Pi considérée (1 ≤ *i* ≤ 5) afin de détecter si la pièce Pi est occupée ou inoccupée.

Dans une première étape de paramétrage E7, on paramètre trois niveaux respectivement haut, intermédiaire et bas de concentration en dioxyde de carbone pour chaque pièce Pi (1 ≤ *i* ≤ 5). Ces niveaux sont avantageusement déterminés par apprentissage à partir de mesures relatives à la concentration en dioxyde de carbone dans l'air de la pièce Pi, réalisées durant une fenêtre temporelle antérieure d'analyse. La détermination des niveaux consiste en définitive à identifier deux seuils de concentration en CO₂ :
- un seuil bas S1 entre le niveau bas et le niveau intermédiaire, et
- un seuil haut S2 entre le niveau intermédiaire et le niveau haut.

Par exemple, les niveaux haut, intermédiaire et bas de concentration en CO₂ sont déterminés par une méthode de partitionnement de données, également appelée « *data clustering* », à partir de données antérieures de concentration en dioxyde de carbone dans la pièce Pi mesurées durant la fenêtre d'analyse antérieure. Cette fenêtre d'analyse a de préférence une durée minimale de 24h, avantageusement de plusieurs jours, par exemple entre 1 jour et 1 semaine. Elle est avantageusement glissante dans le temps de sorte à adapter les niveaux déterminés, autrement dit les seuils S1 et S2 séparant ces niveaux, à l'évolution de l'activité dans la pièce dans le temps. L'étape E7 de paramétrage des niveaux de concentration en CO₂ est avantageusement réitérée régulièrement, par exemple à un intervalle de temps compris entre un jour et une semaine, ou de façon continue en temps réel. Le paramétrage des niveaux haut, intermédiaire et bas de concentration en dioxyde de carbone pour chaque pièce Pi (1 ≤ *i* ≤ 5) est évolutif dans le temps. En d'autres termes, les niveaux déterminés ou paramétrés sont susceptibles d'évoluer, de changer, dans le temps, du fait que la fenêtre d'analyse utilisée pour le paramétrage des niveaux est glissante dans le temps. D'autre part, le paramétrage des niveaux est spécifique à la pièce, c'est-à-dire adapté à celle-ci. Cela découle du fait que les données relatives à la concentration en CO₂ utilisées pour faire le paramétrage sont des données mesurées dans la pièce Pi considérée.

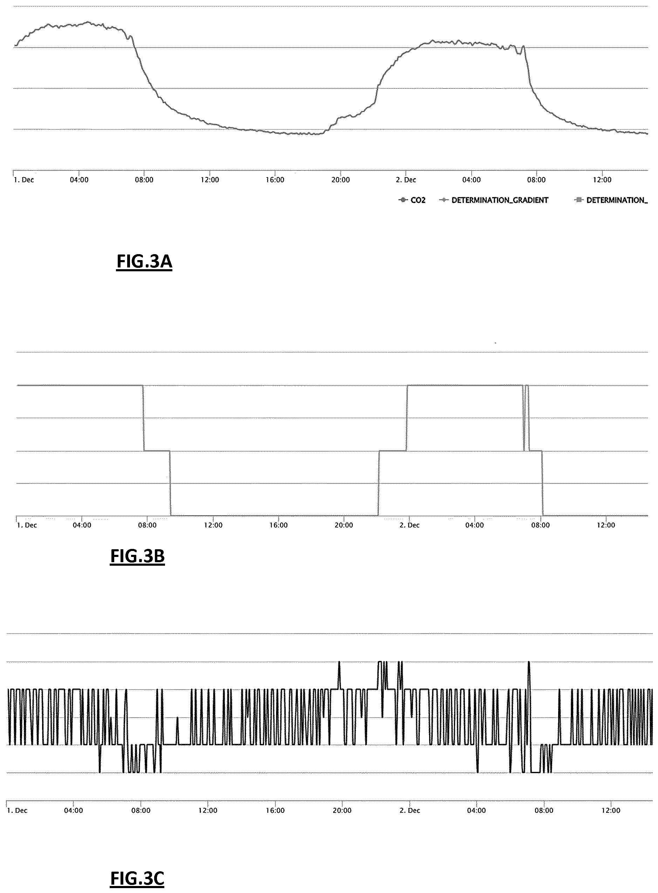

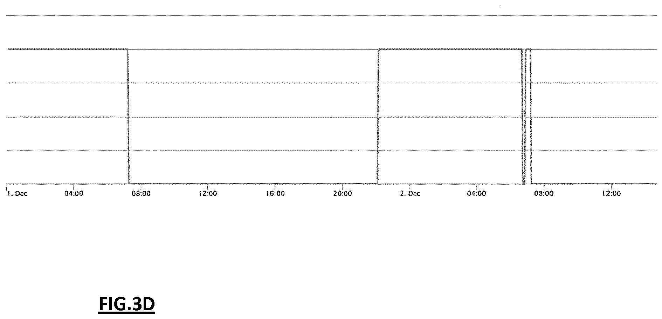

Sur la figure 3A, on a représenté à titre d'exemple illustratif l'évolution de la concentration en CO₂ mesurée dans une pièce Pi, par exemple la chambre P4, durant une fenêtre temporelle de 36h. On observe sur cette figure 3A globalement quatre phases d'évolution de la concentration en CO₂ dans la chambre P4 :
- entre environ 20h et minuit, la concentration en CO₂ augmente progressivement ;
- entre environ minuit et 8h du matin, la concentration en CO₂ est relativement stable et élevée ;
- vers 8h, la concentration en CO₂ diminue rapidement ;
- entre environ 8h et 20h, la concentration en CO₂ est relativement stable et basse.

Sur la figure 3B, on a représenté l'évolution du niveau de concentration en CO₂ durant la même fenêtre temporelle que celle de la figure 3A, qui est obtenue par clustering ou partionnement des données de concentration en CO₂ représentées sur la figure 3A.

Le deuxième test d'occupation E6 comprend un premier test, ou « sous-test », E61 sur la concentration en CO₂ mesurée dans la pièce Pi et, éventuellement en complément, un deuxième test, ou « sous-test », E62 sur le gradient de la concentration en CO₂ mesurée dans la pièce P1.

Lors du premier test E61, on compare la concentration en CO₂ mesurée dans la pièce Pi à un instant t courant, notée *conc*_{*CO*2}(*t*), avec les seuils *S*1(*t*) et *S*2(*t*), déterminés lors du paramétrage E7 et valides à cet instant t. Si la concentration en CO₂ mesurée *conc*_{*CO*2}(*t*) est inférieure au seuil bas *S*1(*t*), elle correspond à un niveau bas de concentration en CO₂ dans la pièce Pi. Le système de pilotage 100 en déduit que la pièce est inoccupée. Si la concentration en CO₂ mesurée *conc*_{*CO*2}(*t*) est supérieure au seuil haut *S*2(*t*), elle correspond à un niveau haut de concentration en CO₂ dans la pièce Pi. Le système de pilotage 100 en déduit que la pièce est occupée. Si la concentration en CO₂ mesurée *conc*_{*CO*2}(*t*) est comprise entre le seuil bas *S*1(*t*) et le seuil haut *S*2(*t*), elle correspond à un niveau intermédiaire de concentration en CO₂ dans la pièce Pi. Dans ce cas seulement, le système de pilotage 100 exécute le deuxième test E62.

Le deuxième test E62 utilise des données mesurées relatives au gradient de concentration en dioxyde de carbone dans la pièce Pi considérée (1 ≤ *i* ≤ 5). Selon que la concentration en CO₂ augmente ou diminue, le gradient est soit positif, soit négatif.

Dans une deuxième étape de paramétrage E8, on paramètre cinq états de gradient possibles :
- un petit gradient positif ;
- un gradient élevé positif ;
- un gradient nul ;
- un petit gradient négatif ;
- un gradient élevé négatif.

Le paramétrage de ces différents états de gradient consiste à déterminer un seuil S3 de gradient entre les états « petit gradient » et « gradient élevé » pour les gradients positifs et un seuil S4 de gradient entre les états « petit gradient » et « gradient élevé » pour les gradients négatifs.

Les états de gradients sont avantageusement déterminés par apprentissage à partir de mesures du gradient de concentration en dioxyde de carbone dans l'air de la pièce Pi, réalisées durant une fenêtre temporelle d'analyse. Par exemple, les états de gradient de concentration en CO₂ sont déterminés par une méthode de partitionnement de données, ou de « *data clustering* », à partir de données antérieures de gradient de concentration en dioxyde de carbone dans la pièce Pi mesurées durant la fenêtre d'analyse. Cette fenêtre d'analyse est avantageusement la même que celle utilisée pour le paramétrage des niveaux de concentration en CO₂. Le paramétrage des états de gradient de concentration en dioxyde de carbone pour chaque pièce Pi (1 ≤ *i* ≤ 5) est également évolutif dans le temps : les seuils S3 et S4 entre les différents états de gradient paramétrés sont susceptibles d'évoluer, de changer, dans le temps, du fait que la fenêtre d'analyse utilisée pour le paramétrage des états de gradient est glissante dans le temps. Le paramétrage des états de gradient est aussi spécifique à la pièce Pi, car il est basé sur des données de gradient de concentration en CO₂ mesurées dans la pièce Pi considérée. Il est exécuté régulièrement ou de façon continue.

Sur la figure 3C, on a représenté l'évolution de l'état du gradient de concentration en CO₂ durant la même fenêtre temporelle que celle représentée sur la figure 3A, les états de gradient étant obtenus par clustering ou partitionnement des données de concentration en CO₂ représentées sur la figure 3A.

Lors du deuxième test E62 sur le gradient de concentration en dioxyde de carbone, le système de pilotage 100 détermine à quel état de gradient correspond le gradient de concentration en dioxyde de carbone mesuré à un instant t courant, noté *grad*_{*CO*2}(*t*), afin de déterminer si la pièce Pi est occupée ou inoccupée :
- si le gradient mesuré *grad*_{*CO*2}(*t*) est positif et correspond à un état de gradient élevé, c'est-à-dire *grad*_{*CO*2}(*t*) ≥ *S*3(*t*) (*S*3(*t*) étant le seuil S3 valide à l'instant t), le système de pilotage 100 détermine que la pièce Pi est occupée (un ou plusieurs occupants venant d'entrer dans la pièce Pi) ;
- si le gradient mesuré est négatif et correspond à un état de gradient élevé, c'est-à-dire *grad*_{*CO*2}(*t*) ≤ *S*4(*t*) (*S*4(*t*) étant le seuil S4 valide à l'instant t), le système de pilotage 100 détermine que la pièce est inoccupée (un ou plusieurs occupants venant de quitter la pièce Pi).

Suite à l'exécution du ou des tests E5, E61 et/ou E62, le procédé comprend un test final d'occupation E9 visant à déterminer si la pièce est inoccupée, en fonction des résultats du ou des tests E5, E61 et E62.

Si le test E9 est positif, la pièce Pi étant inoccupée, le système de pilotage 100 détermine que la pièce Pi est dans un état inactif lors d'une étape E12 de détermination de l'état d'activité de la pièce.

Si le test E9 est négatif, la pièce Pi étant occupée (un ou plusieurs occupants étant présents dans la pièce), le procédé passe à une étape E10 d'identification du type de la pièce Pi afin de déterminer si la pièce Pi est de premier type ou de deuxième type.

Si la pièce Pi est de deuxième type, ce qui est le cas pour les pièces P1 à P3 (séjour, salle de bain et cuisine), le système de pilotage 100 détermine que la pièce Pi de deuxième type occupée est dans un état actif, lors de l'étape E12.

Si la pièce Pi est de premier type, ce qui est le cas pour les pièces P4 et P5 (chambres à coucher), le procédé passe une étape E11 de détection d'un état de repos du ou des occupants dans la pièce Pi. Cette étape E11 vise à détecter si le ou les occupants de la pièce Pi sont au repos, typiquement en phase de sommeil, ou bien en activité. Dans le mode de réalisation décrit ici, la détection de repos est basée sur une analyse de la luminosité dans la pièce Pi. Un capteur de luminosité mesure un niveau d'éclairement lumineux L(t) dans la pièce Pi à un instant t courant. Si le niveau d'éclairement lumineux L(t) mesuré est inférieur à un seuil prédéfini Lₛ, on détecte un état de repos du ou des occupants dans la pièce. Le système de pilotage 100 détermine dans ce cas que la pièce Pi est dans un état inactif lors de l'étape E12. Si le niveau d'éclairement lumineux L(t) mesuré est supérieur au seuil prédéfini Lₛ, on détecte un état de non repos du ou des occupants dans la pièce. Le système de pilotage 100 détermine dans ce cas que la pièce Pi est dans un état actif lors de l'étape E12.

Le procédé passe ensuite à une étape E20 de pilotage automatique du système équipant le local en fonction de l'état d'activité, actif ou inactif, déterminé pour chacune des pièces Pi.

Le système pilotable équipant le local peut être un système de chauffage, un système de ventilation, un ensemble d'appareils électriques, des volets roulants ou autres, qui dispose d'un mode de fonctionnement réduit, ou de veille ou d'économie d'énergie. Dans l'exemple de réalisation décrit ici, le système est un système de chauffage.

Le pilotage automatique peut être adapté pour piloter chacune des pièces Pi (1 ≤ *i* ≤ 5) de façon individuelle, en fonction de l'état actif ou inactif de la pièce Pi. Par exemple, le ou les équipements de chauffage de cette pièce Pi sont pilotés pour fonctionner en régime réduit avec une première température de chauffage dite « basse », si la pièce Pi est dans un état inactif, et en régime normal avec une deuxième température de chauffage dite « haute », supérieure à la première température de chauffage, si la pièce est dans un état actif.

De façon alternative ou complémentaire, le pilotage automatique peut piloter le local de façon globale. Si le local comporte plusieurs pièces, le système de pilotage 100 détermine un état d'activité global du local à partir des états d'activités respectifs déterminés pour les différentes pièces, lors d'une étape E13. Par exemple, le système de pilotage 100 déterminer que le local est :
- dans un état inactif seulement si toutes les pièces sont dans un état inactif et
- dans un état actif si au moins une pièce est dans un état actif.

Dans ce cas, lors de l'étape de pilotage E20, le système de pilotage 100 pilote le système pilotable du local en fonction de l'état d'activité global déterminé pour le local. Ainsi, par exemple, sur détection d'un état inactif du local, le système de pilotage 100 programme un fonctionnement en mode réduit de l'installation domotique. Par exemple, le système de chauffage peut être piloté pour fonctionner en mode réduit, ou d'économie d'énergie, lorsqu'il a été déterminé que le local est dans un état inactif global.

Le procédé peut également comprendre une étape de prévision ou de prédiction de l'état d'activité futur d'une pièce Pi et/ou du local à partir d'un historique de données relatives à l'état d'activité du local. La prévision consiste à prédire une période d'activité (c'est-à-dire d'état actif) ou d'inactivité (c'est-à-dire d'état inactif) d'une pièce Pi et/ou du local à partir d'un historique de données relatives à l'état d'activité de la pièce Pi ou du local. Notamment, le système de pilotage 100 peut prédire une période d'inactivité ou d'activité de la pièce Pi ou du local à partir de l'historique. Par exemple, si le système détecte un début d'inactivité du local dans une tranche horaire comprise entre 22h et minuit, il peut prévoir une période d'inactivité d'une durée de 8h à partir d'un historique des données d'activité du local couvrant plusieurs jours antérieurs. Dans ce cas, le système de pilotage 100 programme un fonctionnement en régime réduit du système pilotable équipant le local, par exemple du système de chauffage, pendant une durée de 8h, jusqu'à la fin de la période d'inactivité prévue, sans réaliser d'autres tests sur les paramètres d'activité détectés ou mesurés.

Notons que, pour déterminer le type d'une pièce, on pourrait se baser sur un historique de la teneur en CO₂ de la pièce. Par exemple, on pourrait analyser la teneur moyenne de CO₂ mesurée dans la pièce entre 02 :00 et 04 :00 sur une semaine. Si cette teneur de CO₂ analysée est basse, par exemple inférieure ou égale à 700 ppm, le système en déduit que la pièce est de deuxième type. Si cette teneur de CO₂ analysée est élevée, par exemple supérieure à 700 ppm, le système en déduit que la pièce est de premier type.

Le ou les tests d'occupation d'une pièce pourraient être complétés par un retour de l'utilisateur qui pourrait signaler au système de pilotage 100 s'il est présent dans une pièce par des moyens d'interface utilisateur.

Le système de pilotage automatique 100, destiné à piloté au moins un système pilotable équipant un local comportant au moins une pièce, comprend des moyens matériels et des moyens logiciels pour mettre en oeuvre les étapes du procédé qui vient d'être décrit.

Dans une forme de réalisation particulière, le système de pilotage 100 comprend les éléments suivants :
- des capteurs ou détecteurs de mouvement 1 installés dans les pièces Pi (avec 1 ≤ *i* ≤ 5) du local, par exemple des capteurs à infrarouge ;
- des capteurs de CO₂ 2, installés ici dans toutes les pièces Pi du local et destinés à mesurer la concentration en CO₂ dans l'air dans ces pièces Pi ;
- des capteurs de luminosité 3, installés ici uniquement dans les pièces de premier type P4 et P5 ;
- une mémoire 4 de stockage des données mesurées ou détectées par les capteurs 1-3 ;
- un module de paramétrage 5, destiné à paramétrer les niveaux de concentration en CO₂ pour chaque pièce Pi du local et les états de gradient de concentration en CO₂ pour chaque pièce Pi (avec 1 ≤ *i* ≤ 5) ;
- un module 6 de détermination de l'état d'occupation - occupé ou inoccupé - d'une pièce Pi ;
- un module 7 de détection d'un état de repos dans une pièce de premier type occupée ;
- une mémoire 8 de stockage du type de chaque pièce ;
- un module 9 de détermination de l'état d'activité - actif ou inactif - de chaque pièce Pi et/ou du local ;
- un module 10 de pilotage d'un système équipant le local ;
- une unité centrale 11, en l'espèce un microprocesseur.

Les différents capteurs 1-3 sont reliés à l'unité centrale 11 par une liaison de communication, avantageusement sans fil. L'unité centrale 11 est destinée à recevoir les données mesurées ou détectées par les capteurs et à les enregistrées dans la mémoire 4.

Les modules 5-7 et 9 sont des modules logiciels destinés à mettre en oeuvre des étapes du procédé lorsqu'ils sont exécutés par l'unité centrale 11, en utilisant le cas échéant des données mesurées ou détectées par des capteurs 1-3.

Le module de paramétrage 5 a pour fonction de paramétrer les niveaux de concentration en CO2 et les états de gradients de concentration en CO2 pour une pièce Pi. Il est destiné à mettre en oeuvre les étapes de paramétrage E7 et E8.

Le module 6 de détermination de l'état d'occupation d'une pièce Pi a pour fonction de détecter si la pièce Pi est occupée ou inoccupée en exécutant :
i. un premier test d'occupation basé sur une détection de mouvement ;
ii. et, seulement si le premier test d'occupation est négatif (aucun mouvement détecté), un deuxième test d'occupation basé sur des mesures relatives à la concentration en dioxyde de carbone.

Le module 6 est destiné à mettre en oeuvre les étapes de test d'occupation E5 et E6.

Le module 7 de détection d'un état de repos dans une pièce occupée de premier type est destiné à détecter si le ou les occupants d'une pièce occupée de premier type sont au repos ici sur la base d'un test de luminosité. Il est destiné à mettre en oeuvre l'étape de test de luminosité E11.

Le module 9 est destiné à exécuter les étapes E12 et E13. Il a pour fonction de déterminer si une pièce Pi et/ou le local sont dans un état actif ou inactif à partir des résultats du module 6 de détermination de l'état d'occupation de la pièce et, dans le cas d'une pièce de premier type occupée, des résultats du module 7 de détection d'un état de repos dans la pièce. Il est notamment agencé pour
- si la pièce est de premier type, déterminer qu'elle est dans un état inactif dans les deux cas i) et ii) suivants :
   iii) si la détection d'occupation est négative ;
   iv) si la détection d'occupation positive, au moins un occupant ayant été détecté dans la pièce, et si un état de repos de l'occupant est détecté et
- si la pièce est de deuxième type, déterminer qu'elle est dans un état inactif seulement si la détection d'occupation est négative.

Le module de pilotage 10 est destiné à piloter le fonctionnement d'un système pilotable équipant le local, en fonction des états actifs/inactifs déterminés pour les pièces Pi et pour le local, comme explicité dans le procédé. Le système pilotable comprend par exemple un système de chauffage, un système de climatisation, un système de ventilation, une porte de garage, un portail d'entrée, des prises électriques et/ou des volets roulants.

Le module de pilotage 10 peut comprendre un sous-module de prédiction ou de prévision d'une période d'inactivité (c'est-à-dire d'état inactif) ou d'activité (c'est-à-dire d'état actif) du local et/ou d'une pièce Pi du local à partir d'un historique de données relatives à l'état d'activité (actif ou inactif) du local et/ou de la pièce Pi. Le module de pilotage 10 est ensuite destiné à programmer des horaires de fonctionnement du système pilotable et un mode de fonctionnement adapté du système pilotable pendant la période prévue d'inactivité ou d'activité.

## Revendications

1. Procédé de pilotage automatique d'au moins un système pilotable équipant un local comportant au moins une pièce (Pi), comprenant les étapes suivantes :
• une étape (E1) de mesure de paramètres d'activité relatifs à la pièce comportant une sous-étape (E2) de détection de mouvement à l'aide d'au moins un détecteur de mouvement installé dans la pièce et une sous-étape (E3) de mesure d'une concentration en dioxyde de carbone dans l'air de la pièce ;
• une étape (E5, E6, E9) de détermination d'un état d'occupation de la pièce (Pi) comportant :
i. un premier test d'occupation (E5) basé sur une détection de mouvement ;
ii. et, dans le cas où le premier test d'occupation est négatif, un deuxième test d'occupation (E5) basé sur des mesures relatives à la concentration en dioxyde de carbone ;
• une étape (E12) de détermination d'un état d'activité de la pièce, ledit état pouvant être actif ou inactif, à partir des résultats de l'étape de détermination de l'état d'occupation de la pièce ;
• une étape (E20) de pilotage automatique du système équipant le local en fonction de l'état d'activité déterminé, actif ou inactif, de la pièce (Pi).

2. Procédé selon la revendication 1, **caractérisé en ce que**, trois niveaux respectivement haut, intermédiaire et bas de concentration en dioxyde de carbone étant paramétrés (E7) pour la pièce (Pi), lors du deuxième test d'occupation (E6), on détermine à quel état correspond la concentration en dioxyde de carbone mesurée et :
• si la concentration mesurée correspond à un état haut, on détermine que la pièce Pi est occupée (E61, E9) ;
• si la concentration mesurée correspond à un état bas, on détermine que la pièce Pi est inoccupée (E61, E9) ;
• si la concentration mesurée correspond à un état intermédiaire, on réalise un test (E62) sur le gradient de concentration en dioxyde de carbone.

3. Procédé selon la revendication précédente, **caractérisé en ce que** les niveaux de concentration en dioxyde de carbone relatifs à une pièce (Pi) sont paramétrés (E7) par une méthode de partitionnement de données, à partir des données mesurées de concentration en dioxyde de carbone dans ladite pièce (Pi) durant une fenêtre temporelle d'analyse, avantageusement glissante dans le temps.

4. Procédé selon la revendication 2 ou 3, **caractérisé en ce que** cinq états de gradient de concentration en dioxyde de carbone, comprenant un petit gradient positif, un gradient élevé positif, un gradient nul, un petit gradient négatif, un gradient élevé négatif, étant paramétrés (E8) pour la pièce (Pi), lors du test (E62) sur le gradient de concentration en dioxyde de carbone, on détermine à quel état correspond le gradient de concentration en dioxyde de carbone mesuré à un instant courant et
• si le gradient mesuré à l'instant courant est positif et correspond à un état de gradient élevé positif, on détermine que la pièce est occupée (E62, E9) ;
• si le gradient mesuré à l'instant courant est négatif et correspond à un état de gradient élevé négatif, on détermine que la pièce est inoccupée (E62, E9).

5. Procédé selon la revendication précédente, **caractérisé en ce que** les états de gradient de concentration en dioxyde de carbone sont paramétrés pour une pièce (Pi) par une méthode de partitionnement de données, à partir des données mesurées de gradient de la concentration en dioxyde de carbone dans ladite pièce durant une fenêtre temporelle d'analyse, avantageusement glissante dans le temps.

6. Procédé selon l'une des revendications précédentes, **caractérisé en ce que**, un premier et un deuxième type de pièce étant définis,
• si la pièce est de premier type, on détermine (E12) qu'elle est dans un état inactif dans les deux cas i) et ii) suivants :
i. si la détection d'occupation est négative (E9) ;
ii. si la détection d'occupation est positive (E9), au moins un occupant ayant été détecté dans la pièce (Pi), et si on détecte (E11) un état de repos de l'occupant et
• si la pièce est de deuxième type, on détermine (E12) qu'elle est dans un état inactif seulement si la détection d'occupation est négative (E9).

7. Procédé selon la revendication précédente, **caractérisé en ce qu'**on mesure un niveau d'éclairement lumineux dans la pièce et si le niveau d'éclairement lumineux est inférieur à un seuil prédéfini (E11), on détecte un état de repos de l'occupant dans la pièce.

8. Procédé selon l'une des revendications précédentes, **caractérisé en ce que**, le local comportant une pluralité de pièces, on détermine un état d'activité global du local à partir des états d'activité respectifs des pièces du local, et, lors de l'étape de pilotage (E20), on pilote le système pilotable équipant le local en fonction de l'état d'activité global du local.

9. Procédé selon la revendication précédente, **caractérisé en ce qu'**il comprend une étape de prévision d'une période d'activité ou d'inactivité du local à partir de données antérieures relatives à l'état d'activité de la pièce ou du local, et **en ce que**, lors de l'étape de pilotage, on programme un mode de fonctionnement adapté pendant la période d'activité ou d'inactivité prévue.

10. Procédé selon l'une des revendications précédentes, **caractérisé en ce que** le système pilotable du local est l'un au moins des systèmes du groupe comportant un système de chauffage, un système de climatisation, un système de ventilation, une porte de garage, un portail d'entrée, des prises électriques et des volets roulants.

11. Système de pilotage automatique d'au moins un système pilotable équipant un local comportant au moins une pièce, comprenant des moyens matériels et des moyens logiciels pour mettre en oeuvre les étapes du procédé selon l'une des revendications précédentes.

12. Système selon la revendication précédente **caractérisé en ce qu'**il comprend :
• des capteurs (1-3) de paramètres d'activité relatifs à la pièce comportant au moins un détecteur de mouvement installé dans la pièce et au moins un capteur de concentration en dioxyde de carbone dans l'air de la pièce ;
• un module (6) de détermination d'un état d'occupation, occupé ou inoccupé, de la pièce, destiné à exécuter
i. un premier test d'occupation (E61) basé sur une détection de mouvement ;
ii. et, si le premier test d'occupation est négatif, un deuxième test d'occupation (E62) basé sur des mesures relatives à la concentration en dioxyde de carbone ;
• un module (9) de détermination d'un état d'activité de la pièce, ledit état pouvant être actif ou inactif, à partir des résultats du module de détermination de l'état d'occupation de la pièce ;
• un module (10) de pilotage automatique du système pilotable équipant le local en fonction de l'état d'activité déterminé, actif ou inactif, de la pièce.

13. Système selon la revendication précédente, **caractérisé en ce que**, un premier et un deuxième type de pièce étant définis, il comprend un module (7) de détection d'un état de repos dans une pièce de premier type occupée et **en ce que** le module (9) de détermination d'un état d'activité de la pièce est agencé pour
• si la pièce est de premier type, déterminer qu'elle est dans un état inactif dans les deux cas i) et ii) suivants :
i. si la détection d'occupation est négative ;
ii. si la détection d'occupation positive, au moins un occupant ayant été détecté dans la pièce, et si un état de repos de l'occupant est détecté et
• si la pièce est de deuxième type, déterminer qu'elle est dans un état inactif seulement si la détection d'occupation est négative.

## Patentansprüche

1. Verfahren zum automatischen Steuern wenigstens eines steuerbaren Systems, mit dem eine Räumlichkeit, die wenigstens einen Raum (Pi) enthält, ausgerüstet ist, das die folgenden Schritte umfasst:
• einen Schritt (E1) des Messens von Aktivitätsparametern bezüglich des Raums, der einen Unterschritt (E2) des Detektierens einer Bewegung mit Hilfe wenigstens eines Bewegungsdetektors, der in dem Raum installiert ist, und einen Unterschritt (E3) des Messens einer Kohlenstoffdioxidkonzentration in der Luft des Raums umfasst;
• einen Schritt (E5, E6, E9) des Bestimmens eines Belegungszustands des Raums (Pi), der Folgendes enthält:
i. eine erste Belegungsprüfung (E5), die auf einer Bewegungsdetektion beruht;
ii. und, falls die erste Belegungsprüfung negativ ist, eine zweite Belegungsprüfung (E5), die auf Messungen bezüglich der Konzentration von Kohlenstoffdioxid beruht;
• einen Schritt (E12) des Bestimmens eines Aktivitätszustands des Raums, wobei der Zustand aktiv oder inaktiv sein kann, anhand der Ergebnisse des Schrittes des Bestimmens des Belegungszustands des Raums;
• einen Schritt (E20) des automatischen Steuerns des Systems, mit dem die Räumlichkeit ausgerüstet ist, als Funktion des bestimmten Aktivitätszustands, aktiv oder inaktiv, des Raums (Pi).

2. Verfahren nach Anspruch 1, **dadurch gekennzeichnet, dass** dann, wenn drei Pegel, nämlich ein hoher, ein mittlerer und ein niedriger Pegel, für die Kohlenstoffdioxidkonzentration Parameter (E7) für den Raum (Pi) sind, in der zweiten Belegungsprüfung (E6) bestimmt wird, welchem Zustand die gemessene Kohlenstoffdioxidkonzentration entspricht, und dass,
• falls die gemessene Konzentration einem hohen Zustand entspricht, bestimmt wird, dass der Raum Pi belegt ist (E61, E9) ;
• falls die gemessene Konzentration einem niedrigen Zustand entspricht, bestimmt wird, dass der Raum Pi nicht belegt ist (E61, E9);
• falls die gemessene Konzentration einem mittleren Zustand entspricht, an dem Gradienten der Kohlenstoffdioxidkonzentration eine Prüfung (E62) ausgeführt wird.

3. Verfahren nach dem vorhergehenden Anspruch, **dadurch gekennzeichnet, dass** die Pegel der Kohlenstoffdioxidkonzentration bezüglich eines Raums (Pi) Parameter (E7) sind für eine Datenpartitionierungsmethode ausgehend von gemessenen Daten der Kohlenstoffdioxidkonzentration in dem Raum (Pi) während eines Analysezeitfensters, das vorzugsweise zeitlich gleitet.

4. Verfahren nach Anspruch 2 oder 3, **dadurch gekennzeichnet, dass** dann, wenn fünf Zustände für den Gradienten der Kohlenstoffdioxidkonzentration, die einen kleinen positiven Gradienten, einen hohen positiven Gradienten, einen Gradienten null, einen kleinen negativen Gradienten und einen großen negativen Gradienten umfassen, Parameter (E8) für den Raum (Pi) sind, bei der Prüfung (E62) des Gradienten der Kohlenstoffdioxidkonzentration bestimmt wird, welchem Zustand der gemessene Gradient der Kohlenstoffdioxidkonzentration zu einem aktuellen Zeitpunkt entspricht, und dass,
• falls der zu dem aktuellen Zeitpunkt gemessene Gradient positiv ist und einem Zustand mit großem positiven Gradienten entspricht, bestimmt wird, dass der Raum belegt ist (E62, E9);
• falls der zu dem aktuellen Zeitpunkt gemessene Gradient negativ ist und einem Zustand mit großem negativen Gradienten entspricht, bestimmt wird, dass der Raum nicht belegt ist (E62, E9).

5. Verfahren nach den vorhergehenden Anspruch, **dadurch gekennzeichnet, dass** die Zustände des Gradienten der Kohlenstoffdioxidkonzentration Parameter für einen Raum (Pi) sind für eine Datenpartitionierungsmethode ausgehend von gemessenen Daten des Gradienten der Kohlenstoffdioxidkonzentration in dem Raum während eines Zeitanalysefensters, das vorzugsweise zeitlich gleitet.

6. Verfahren nach einem der vorhergehenden Ansprüche, **dadurch gekennzeichnet, dass** dann, wenn ein erster und ein zweiter Raumtyp definiert sind,
• falls der Raum vom ersten Typ ist, bestimmt (E12) wird, dass er in den beiden folgenden Fällen i) und ii) in einem inaktiven Zustand ist:
i) falls die Detektion der Belegung negativ ist (E9) ;
ii) falls die Detektion der Belegung positiv ist (E9), wobei wenigstens ein Insasse in dem Raum (Pi) detektiert worden ist, und falls ein Ruhezustand des Insassen detektiert (E11) wird, und
• falls der Raum vom zweiten Typ ist, bestimmt (E12) wird, dass er nur dann in einem inaktiven Zustand ist, wenn die Belegungsdetektion negativ ist (E9).

7. Verfahren nach den vorhergehenden Anspruch, **dadurch gekennzeichnet, dass** ein Beleuchtungspegel in dem Raum gemessen wird und dass dann, wenn der Beleuchtungspegel niedriger als ein im Voraus definierter Schwellenwert (E11) ist, ein Ruhezustand des Insassen in dem Raum detektiert wird.

8. Verfahren nach einem der vorhergehenden Ansprüche, **dadurch gekennzeichnet, dass** dann, wenn die Räumlichkeit mehrere Räume umfasst, ein globaler Aktivitätszustand der Räumlichkeit anhand der jeweiligen Aktivitätszustände der Räume der Räumlichkeit bestimmt wird und im Steuerungsschritt (E20) das steuerbare System, mit dem die Räumlichkeit ausgerüstet ist, als Funktion des globalen Aktivitätszustands der Räumlichkeit gesteuert wird.

9. Verfahren nach dem vorhergehenden Anspruch, **dadurch gekennzeichnet, dass** es einen Schritt des Vorhersagens einer Aktivitäts- oder Inaktivitätsperiode der Räumlichkeit ausgehend von früheren Daten bezüglich des Aktivitätszustands des Raums oder der Räumlichkeit umfasst und das im Steuerungsschritt während der vorhergesagten Aktivitäts- oder Inaktivitätsperiode eine angepasste Betriebsart programmiert wird.

10. Verfahren nach einem der vorhergehenden Ansprüche, **dadurch gekennzeichnet, dass** das steuerbare System der Räumlichkeit wenigstens eines der Systeme der Gruppe ist, die ein Heizsystem, ein Klimatisierungssystem, ein Belüftungssystem, ein Garagentor, eine Eingangstür, elektrische Anschlüsse und Rollläden umfasst.

11. Automatisches Steuersystem für wenigstens ein steuerbares System, mit dem eine Räumlichkeit, die wenigstens einen Raum enthält, ausgerüstet ist, das Hardware-Mittel und Software-Mittel für die Ausführung der Schritte des Verfahrens nach einem der vorhergehenden Ansprüche enthält.

12. System nach dem vorhergehenden Anspruch, **dadurch gekennzeichnet, dass** es Folgendes umfasst:
• Sensoren (1-3) für Aktivitätsparameter bezüglich des Raums, die wenigstens einen Bewegungsdetektor, der in dem Raum installiert ist, und wenigstens einen Sensor für die Kohlenstoffdioxidkonzentration in der Luft des Raums enthalten;
• ein Modul (6) für die Bestimmung eines Belegungszustands, belegt oder nicht belegt, in dem Raum, das dazu bestimmt ist, Folgendes auszuführen:
i. eine erste Belegungsprüfung (E61), die auf einer Bewegungsdetektion beruht;
ii. und, falls die erste Belegungsprüfung negativ ist, eine zweite Belegungsprüfung (E62), die auf Messungen bezüglich der Kohlenstoffdioxidkonzentration beruht;
• ein Modul (9) für die Bestimmung eines Aktivitätszustandes des Raums, wobei der Zustand aktiv oder inaktiv sein kann, anhand der Ergebnisse des Moduls für die Bestimmung der Belegungsprüfung des Raums;
• ein Modul (10) für die automatische Steuerung des steuerbaren Systems, mit dem die Räumlichkeit ausgerüstet ist, als Funktion des bestimmten Aktivitätszustands, aktiv oder inaktiv, des Raums.

13. System nach den vorhergehenden Anspruch, **dadurch gekennzeichnet, dass** es dann, wenn ein erster und ein zweiter Raumtyp definiert sind, ein Modul (7) zum Detektieren eines Ruhezustands in einem belegten Raum des ersten Typs enthält und dass das Modul (9) für die Bestimmung eines Aktivitätszustands des Raums dafür ausgelegt ist,
• dann, wenn der Raum vom ersten Typ ist, zu bestimmen, dass er in einem der beiden folgenden Fälle i) und ii) in einem inaktiven Zustand ist:
i) falls die Belegungsdetektion negativ ist;
ii) falls die Belegungsdetektion positiv ist, wobei wenigstens ein Insasse in dem Raum detektiert worden ist, und falls ein Ruhezustand des Insassen detektiert worden ist, und
• dann, wenn der Raum vom zweiten Typ ist, nur dann zu bestimmen, dass er in einem inaktiven Zustand ist, falls die Belegungsdetektion negativ ist.

## Claims

1. Method for automatic control of at least one controllable system equipping a premises including at least one room (Pi), comprising the following steps:
• a step (E1) of measurement of parameters of activity relating to the room including a sub-step (E2) of detection of movement using at least one movement detector installed in the room, and a sub-step (E3) of measurement of a concentration of carbon dioxide in the air of the room;
• a step (E5, E6, E9) of determination of a state of occupation of the room (Pi) including:
i. a first test of occupation (E5) based on a detection of movement;
ii. and, if the first test of occupation is negative, a second test of occupation (E5) based on measurements relating to the concentration of carbon dioxide;
• a step (E12) of determination of a state of activity of the room, it being possible for said state to be active or inactive, based on the results of the step of determination of the state of occupation of the room;
• a step (E20) of automatic control of the system equipping the premises as a function of the determined, active or inactive, state of activity of the room (Pi).

2. Method according to Claim 1, **characterized in that** three levels, respectively high, intermediate and low, of concentration of carbon dioxide being calibrated (E7) for the room (Pi), in the course of the second test of occupation (E6) the state corresponding to the measured concentration of carbon dioxide is determined, and:
• if the measured concentration corresponds to a high state, it is determined that the room (Pi) is occupied (E61, E9);
• if the measured concentration corresponds to a low state, it is determined that the room (Pi) is unoccupied (E61, E9);
• if the measured concentration corresponds to an intermediate state, a test (E62) is performed on the gradient of concentration of carbon dioxide.

3. Method according to the preceding claim, **characterized in that** the levels of concentration of carbon dioxide relating to a room (Pi) are calibrated (E7) using a method of data partition, based on measured data of concentration of carbon dioxide in said room (Pi) during an analysis time window, advantageously sliding over time.

4. Method according to Claim 2 or 3, **characterized in that** five states of gradients of concentration of carbon dioxide, comprising a small positive gradient, a high positive gradient, a zero gradient, a small negative gradient, a high negative gradient, being calibrated (E8) for the room (Pi), in the course of the test (E62) on the gradient of concentration of carbon dioxide the state corresponding to the gradient of concentration of carbon dioxide measured at a current instant is determined, and
• if the gradient measured at the current instant is positive and corresponds to a state of high positive gradient, it is determined that the room is occupied (E62, E9);
• if the gradient measured at the current instant is negative and corresponds to a state of high negative gradient, it is determined that the room is unoccupied (E62, E9).

5. Method according to the preceding claim, **characterized in that** the states of gradient of concentration of carbon dioxide are calibrated for a room (Pi) using a method of data partition, based on measured data of gradient of concentration of carbon dioxide in said room during an analysis time window, advantageously sliding over time.

6. Method according to one of the preceding claims, **characterized in that**, a first and a second type of room being defined,
• if the room is of first type, it is determined (E12) that it is in an inactive state in the two cases i) and ii) as follows:
i. if the detection of occupation is negative (E9) ;
ii. if the detection of occupation is positive (E9), at least one occupant having been detected in the room (Pi) and if a state of rest of the occupant is detected (E11), and
• if the room is of second type, it is determined (E12) that it is in an inactive state only if the detection of occupation is negative (E9).

7. Method according to the preceding claim, **characterized in that** a level of illumination in the room is measured, and if the level of illumination is below a predefined threshold (E11), a state of rest of the occupant in the room is detected.

8. Method according to one of the preceding claims, **characterized in that**, the premises including a plurality of rooms, a global state of activity of the premises is determined on the basis of respective states of activity of the rooms of the premises, and, in the course of the control step (E20), the controllable system equipping the premises is controlled as a function of the global state of activity of the premises.

9. Method according to the preceding claim, **characterized in that** it comprises a step of predicting a period of activity or of inactivity of the premises based on earlier data relating to the state of activity of the room or of the premises, and **in that**, in the course of the control step, a functioning mode adapted during the predicted period of activity or of inactivity is programmed.

10. Method according to one of the preceding claims, **characterized in that** the controllable system of the premises is one at least of the systems of the group including a heating system, an air-conditioning system, a ventilation system, a garage door, an entry doorway, electrical sockets and roller shutters.

11. System for automatic control of at least one controllable system equipping a premises including at least one room, comprising hardware means and software means for implementing the steps of the method according to one of the preceding claims.

12. System according to the preceding claim, **characterized in that** it comprises:
• sensors (1-3) of parameters of activity relating to the room including at least one movement detector installed in the room and at least one sensor of concentration of carbon dioxide in the air of the room;
• a module (6) of determination of a state, occupied or unoccupied, of occupation of the room, designed to implement
i. a first occupation test (E61) based on a detection of movement;
ii. and, if the first occupation test is negative, a second occupation test (E62) based on measurements relating to the concentration of carbon dioxide;
• a module (9) of determination of a state of activity of the room, it being possible for said state to be active or inactive, on the basis of the results of the module of determination of the state of occupation of the room;
• a module (10) for automatically controlling the controllable system equipping the premises as a function of the determined, active or inactive, state of activity of the room.

13. System according to the preceding claim, **characterized in that**, a first and a second type of room being defined, it comprises a module (7) of detection of a state of rest in an occupied room of first type, and **in that** the module (9) of determination of a state of activity of the room is arranged in order
• if the room is of first type, to determine that it is in an inactive state in the two cases i) and ii) as follows:
i. if the detection of occupation is negative;
ii. if the detection of occupation is positive, at least one occupant having been detected in the room, and if a state of rest of the occupant is detected, and
• if the room is of second type, to determine that it is in an inactive state only if the detection of occupation is negative.
